(19) Europäisches Patentamt
European Patent Office
Office européen des brevets

(11) **EP 4 718 510 A1**

(12) **EUROPEAN PATENT APPLICATION**

(43) Date of publication:
**01.04.2026 Bulletin 2026/14**

(21) Application number: **25204803.8**

(22) Date of filing: **26.09.2025**

(51) International Patent Classification (IPC):
*H01M 4/131* (2010.01)  *H01M 4/1391* (2010.01)
*H01M 4/36* (2006.01)  *H01M 4/62* (2006.01)
*H01M 4/86* (2006.01)  *H01M 4/02* (2006.01)

(52) Cooperative Patent Classification (CPC):
**H01M 4/131; H01M 4/1391; H01M 4/362;
H01M 4/366; H01M 4/621; H01M 4/624;
H01M 10/4235;** H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.09.2024 KR 20240133135**

(71) Applicant: **SAMSUNG SDI CO., LTD.**
**Yongin-si, Gyeonggi-do 17084 (KR)**

(72) Inventor: **YEOU, Jung Ock**
**17084 Gyeonggi-do (KR)**

(74) Representative: **Michalski Hüttermann & Partner
Patentanwälte mbB
Kaistraße 16A
40221 Düsseldorf (DE)**

(54) **POSITIVE ELECTRODE AND RECHARGEABLE LITHIUM BATTERY INCLUDING THE SAME**

(57) Disclosed are positive electrodes (10) and rechargeable lithium batteries (100). The positive electrode includes a current collector (COL1), a first active material layer (ALT1) on the current collector, and a second active material layer (ALT2) on the first active material layer. The first active material layer includes a first positive electrode active material (CAM1) and a first lithium-based additive (LAD1). The second active material layer includes a second positive electrode active material (CAM2) and a second lithium-based additive (LAD2). An amount of the second lithium-based additive in the second active material layer is greater than the amount of the first lithium-based additive in the first active material layer.

FIG. 7A

**Description**

CROSS-REFERENCE TO RELATED APPLICATION

This application claims priority under 35 U.S.C § 119 to Korean Patent Application No. 10-2024-0133135 filed on September 30, 2024 in the Korean Intellectual Property Office, the disclosure of which is herein incorporated by reference in its entirety.

BACKGROUND

Examples of the present disclosure relate to a positive electrode and a rechargeable lithium battery including the positive electrode, and more particularly, to a positive electrode including a Ni-based additive and a rechargeable lithium battery including the positive electrode.

With increasing presence of battery-using electronic devices, such as, e.g., mobile phones, laptop computers, electric vehicles, and the like, there is increasing demand for rechargeable batteries with high energy density and high capacity. Therefore, improving performance of rechargeable lithium batteries may be advantageous.

A rechargeable lithium battery includes a positive electrode, a negative electrode, and an electrolyte, the positive and negative electrodes including an active material in which intercalation and deintercalation are possible, and the rechargeable lithium battery generates electrical energy caused by oxidation and reduction reactions when lithium ions are intercalated and deintercalated.

SUMMARY

An example embodiment of the present disclosure includes a positive electrode with improved capacity and lifespan characteristics.

An example embodiment of the present disclosure includes a rechargeable lithium battery including the positive electrode.

According to an example embodiment of the present disclosure, a positive electrode for a rechargeable lithium battery may include a current collector; a first active material layer on the current collector; and a second active material layer on the first active material layer. The first active material layer may include a first positive electrode active material and a first lithium-based additive. The second active material layer may include a second positive electrode active material and a second lithium-based additive. Each of, or at least one of, the first lithium-based additive and the second lithium-based additive may include at least one of a compound represented by Chemical Formula 1-1, a compound represented by Chemical Formula 1-2, and a compound represented by Chemical Formula 1-3. An amount of the second lithium-based additive in the second active material layer may be greater than an amount of the first lithium-based additive in the first active material layer.

Chemical Formula 1-1: $Li_{x1}NiO_2$

Chemical Formula 1-2: $Li_{x2}FeO_4$

Chemical Formula 1-3: $Li_{x3}Co_{(1-y-z-m)}Zn_yAl_zM_mO_4$

In Chemical Formula 1-1, the subscript x may satisfy the relationship of $1.1 \leq x1 \leq 2.5$.

In Chemical Formula 1-2, the subscript x may satisfy the relationship of $1.1 \leq x2 \leq 5.5$.

In Chemical Formula 1-3, M may be or include at least one of Ti, Zr, Mn, or Ni, and the subscripts x, y, z, and m may satisfy the relationship of $5 \leq x3 \leq 7$, $0<y \leq 0.5$, $0<z \leq 0.5$, $0<y+z+m<1$, and $0 \leq m \leq 0.5$.

According to an example embodiment of the present disclosure, a positive electrode for a rechargeable lithium battery may include a current collector; and a positive electrode active material layer on the current collector. The positive electrode active material layer may include a positive electrode active material and a lithium-based additive. The lithium-based additive may include at least one of a compound represented by Chemical Formula 1-1, a compound represented by Chemical Formula 1-2, and a compound represented by Chemical Formula 1-3. The positive electrode active material layer may include a first portion adjacent to the current collector and a second portion adjacent to a surface of the positive electrode active material layer. A weight of the lithium-based additive may be in a range of $\geq 1\%$ to $\leq 10\%$ of a total weight of the positive electrode active material layer. An amount of the lithium-based additive in the second portion may be greater than an amount of the lithium-based additive in the first portion.

According to an example embodiment of the present disclosure, a rechargeable lithium battery may include the positive electrode discussed above; a negative electrode including a negative electrode active material; and a separator between the positive electrode and the negative electrode.

BRIEF DESCRIPTION OF DRAWINGS

FIG. 1 is a simplified conceptual diagram illustrating a rechargeable lithium battery according to an example embodiment of the present disclosure.

FIGS. 2 to 5 are simplified diagrams illustrating a rechargeable lithium battery according to an example embodiment of the present disclosure, with FIG. 2 illustrating a cylindrical battery, FIG. 3 illustrating a prismatic battery, and FIGS. 4 and 5 illustrating pouch-type batteries.

FIG. 6 is a cross-sectional view illustrating a positive electrode for a rechargeable lithium battery according to an example embodiment of the present disclosure.

FIGS. 7A and 7B are enlarged views illustrating a positive electrode according to an example embodiment of the present disclosure.

FIG. 8 is a cross-sectional view illustrating a positive electrode according to an example embodiment of the present disclosure.

FIG. 9 is an enlarged view illustrating a positive electrode according to an example embodiment of the present disclosure.

FIG. 10 is a diagram showing a method of manufacturing a positive electrode according to an example embodiment of the present disclosure.

DETAILED DESCRIPTION OF EMBODIMENTS

In order to sufficiently understand the configuration and effect of the present disclosure, some example embodiments of the present disclosure are described with reference to the accompanying drawings. It may be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present therebetween. In the drawings, thicknesses of some components are exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions illustrated as examples in the drawings have general properties, and shapes of regions illustrated as examples in the drawings are used to disclose specific shapes, but not limited to the scope of the present disclosure. It is understood that, although the terms "first", "second", "third," and the like, may be used herein to describe various elements, these elements may not be limited by these terms. These terms are only used to distinguish one element from another element. The example embodiments explained and illustrated herein include complementary embodiments thereof.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

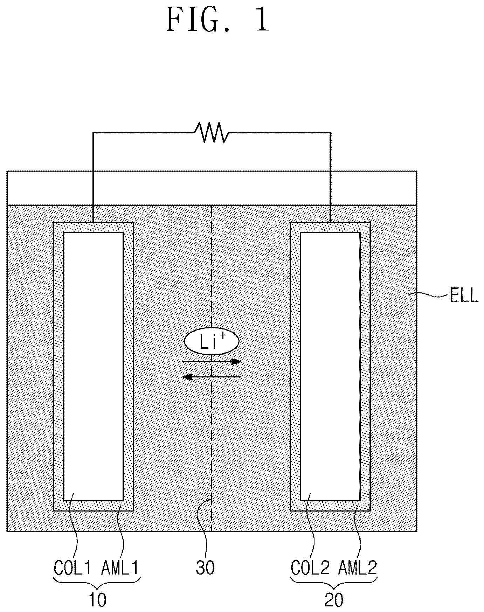

FIG. 1 is a simplified conceptual diagram illustrating a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

Positive Electrode 10

The positive electrode 10 for the rechargeable lithium battery may include a current collector COL1 and a positive electrode active material layer AML1 formed on the current collector COL1. The positive electrode active material layer AML1 may include a positive electrode active material, and may further include a binder and/or a conductive material.

For example, the positive electrode 10 may further include an additive that can be configured as a sacrificial positive electrode.

An amount of the positive electrode active materials in the positive electrode active material layer AML1 may range from $\geq$ 90 wt% to $\leq$ 99.5 wt% relative to 100 wt% of the positive electrode active material layer AML1. Amounts of the binder and the conductive material may be in a range of $\geq$ 0.5 wt% to $\leq$ 5 wt% relative to 100 wt% of the positive electrode active material layer AML1.

The binder may be configured to improve attachment of positive electrode active material particles to each other, and to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-including polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be included to provide an electrode with conductivity, and any suitable conductive material that does not cause a chemical change in a battery may be included as the conductive material. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

Aluminum (Al) may be included as the current collector COL1, but the present disclosure is not limited thereto.

Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithiummanganese-based oxide, lithium-iron-phosphate-based compounds, cobalt-free nickelmanganese-based oxide, or a combination thereof.

For example, the positive electrode active material may include a compound expressed by one of chemical formulae below. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0<\alpha<2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0<\alpha<2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); $Li_aFePO_4$ (where $0.90 \leq a \leq 1.8$).

In the chemical formulae above, A may be or include at least one of Ni, Co, Mn, or a combination thereof, X may be or include at least one of Al, Ni, Co, Mn, Cr, Fe, Mg, Sr, V, a rare-earth element, or a combination thereof, D may be or include at least one of O, F, S, P, or a combination thereof, G may be or include at least one of Al, Cr, Mn, Fe, Mg, La, Ce, Sr, V, or a combination thereof, and $L^1$ may be or include at least one of Mn, Al, or a combination thereof.

For example, the positive electrode active material may be or include a high-nickel-based positive electrode active material having a nickel amount that is equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of metal devoid of lithium in the lithium transition metal composite oxide. The high-nickel-based positive electrode active material may achieve high capacity, and thus may be applied to a highcapacity and high-density rechargeable lithium battery.

Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material.

For example, the negative electrode active material layer AML2 may include a negative electrode active material in a range of $\geq$ 90 wt% to $\leq$ 99 wt%, a binder in a range of $\geq$ 0.5 wt% to $\leq$ 5 wt%, and a conductive material in a range of $\geq$ 0 wt% to $\leq$ 5 wt%.

The binder may be configured to improve attachment of negative electrode active material particles to each other, and to improve attachment of the negative electrode active material to the current collector COL2. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is included as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoridehexafluoropropylene copolymer, polyethylene oxide, or a combination thereof.

The conductive material may be included to provide an electrode with conductivity, and any suitable conductive material that does not cause a chemical change in a battery may be included as the conductive material. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

Negative Electrode Active Material

The negative electrode active material in the negative electrode active material layer AML2 may include at least one of a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fibershaped natural or artificial graphite, and the amorphous carbon may include at least one of soft carbon, hard carbon, mesophase pitch carbon, or calcined coke.

The lithium metal alloy may include an alloy of lithium and a metal that includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, $SiO_x$ (where $0<x\leq2$), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, $SnO_2$, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) on a surface of the secondary particle. The amorphous carbon may also be present between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer on a surface of the core.

The Si-based negative electrode active material or the Sn-based negative electrode active material may be included in combination with a carbon-based negative electrode active material.

Separator 30

Based on a type of the rechargeable lithium battery, the separator 30 may be present between the positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate, and a coating layer on one or opposite surfaces of the porous substrate, the coating layer including an organic material, an inorganic material, or a combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon™, and polytetrafluoroethylene, or may be or include a copolymer or mixture including two or more of the above materials.

The organic material may include a polyvinylidenefluoride-based copolymer or a (meth)acrylic copolymer.

The inorganic material may include an inorganic particle such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be mixed in one coating layer, or may be present as a stack of a coating layer including the organic material and a coating layer including an inorganic material.

Electrolyte ELL

The electrolyte ELL for a rechargeable lithium battery may include a non-aqueous organic solvent and a lithium salt.

The non-aqueous organic solvent may be configured as a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include at least one of ethyl alcohol or isopropyl alcohol, and the aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be included alone or in a mixture of two or more substances.

In addition, when a carbonate-based solvent is included, a cyclic carbonate and a linear carbonate may be mixed, and the cyclic carbonate and the linear carbonate may be mixed in a volume ratio in a range of about 1:1 to about 1:9.

The lithium salt may be or include a material that is configured to dissolve in the non-aqueous organic solvent to be configured as a supply source of lithium ions in a battery, and is configured to enable a basic operation of a rechargeable lithium battery and in promoting the movement of lithium ions between positive and negative electrodes. The lithium salt may include, for example, at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluorobis(oxalato)borate (LiDFOB), lithium difluorobis(oxalato)phosphate (LiDFOP), and lithium bis(oxalato)borate (LiBOB)

Rechargeable Lithium Battery

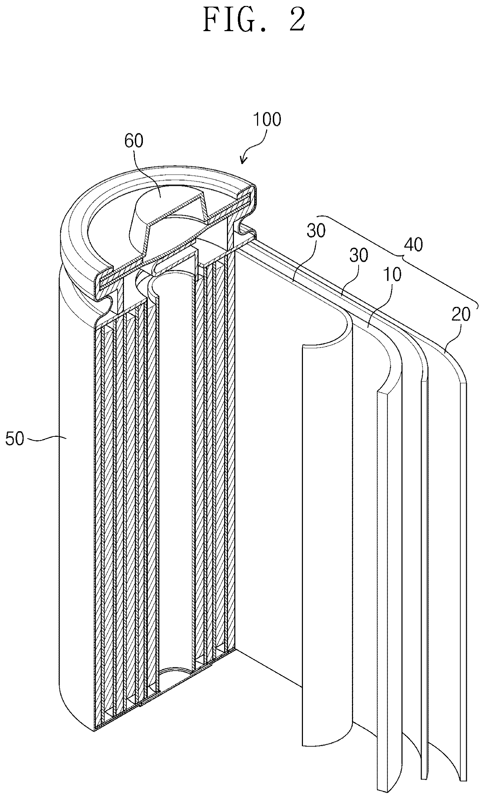

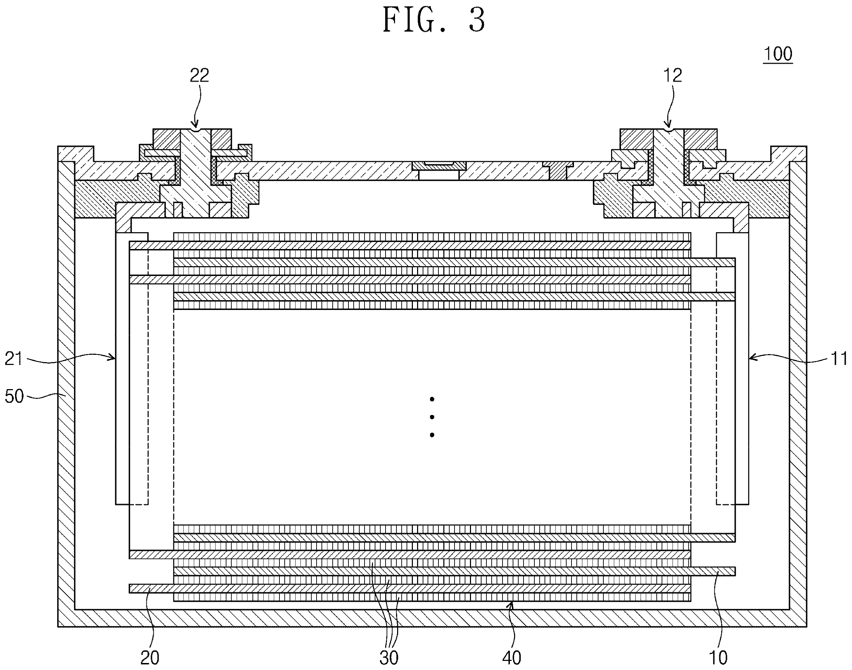

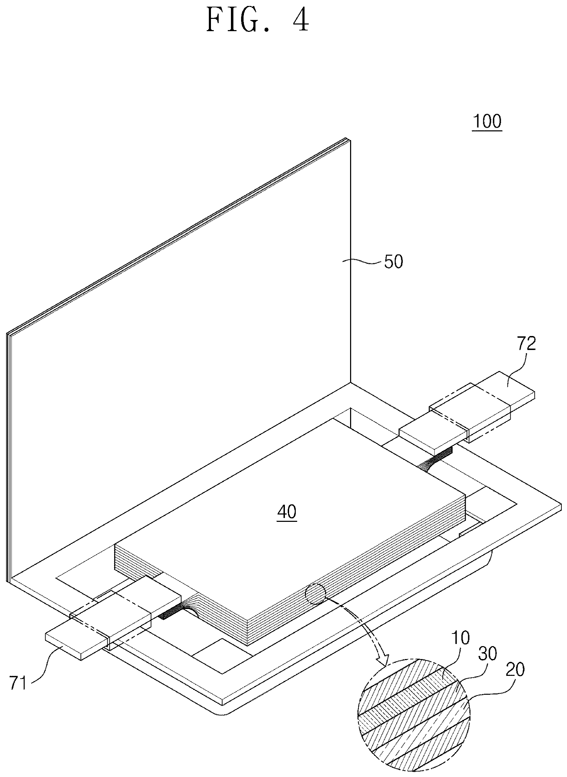

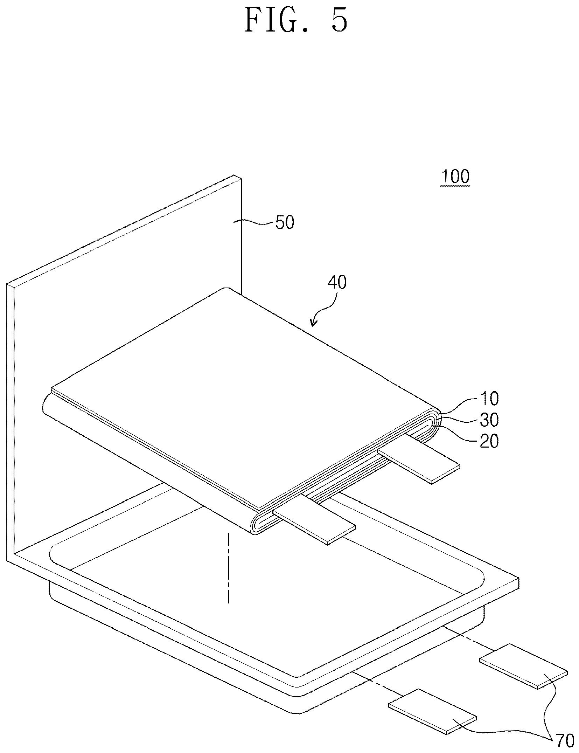

Based on a shape of a rechargeable lithium battery, the rechargeable lithium battery may be classified into cylindrical, prismatic, pouch, and coin types. FIGS. 2 to 5 illustrate simplified diagrams showing a rechargeable lithium battery according to an example embodiment of the present disclosure, with FIG. 2 illustrating a cylindrical battery, FIG. 3 illustrating a prismatic battery, and FIGS. 4 and 5 illustrating pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40.

The following description focuses on a positive electrode according to an example embodiment of the present disclosure.

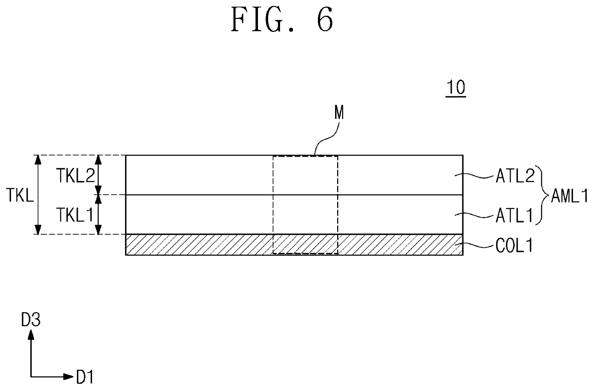

FIG. 6 is a cross-sectional view illustrating a positive electrode for a rechargeable lithium battery according to an example embodiment of the present disclosure.

Referring to FIG. 6, a positive electrode 10 may include a current collector COL1, and a positive electrode active material layer AML1 on the current collector COL1.

In an example embodiment, aluminum (Al) may be included as the current collector COL1, but the present disclosure is not limited thereto.

The positive electrode active material layer AML1 may include a first active material layer ATL1 on the current collector COL1, and a second active material layer ATL2 on the first active material layer ATL1.

The first active material layer ATL1 may have a thickness TKL1, and the second active material layer ATL2 may have a thickness TKL2.

A thickness TKL of the positive electrode active material layer AML1 may be a sum of the thickness TKL1 of the first active material layer ATL1 and the thickness TKL2 of the second active material layer ATL2.

The thickness TKL of the positive electrode active material layer AML1 may range from $\geq 10\,\mu m$ to $\leq 170\,\mu m$. For example, the thickness TKL of the positive electrode active material layer AML1 may be equal or greater than about $10\,\mu m$, $11\,\mu m$, $15\,\mu m$, $20\,\mu m$, $30\,\mu m$, or $40\,\mu m$. For example, the thickness TKL of the positive electrode active material layer AML1 may be equal or less than about $170\,\mu m$, $160\,\mu m$, $150\,\mu m$, $140\,\mu m$, $130\,\mu m$, $120\,\mu m$, $110\,\mu m$, $100\,\mu m$, $90\,\mu m$, $80\,\mu m$, $70\,\mu m$, $60\,\mu m$, or $50\,\mu m$.

When the thickness TKL of the positive electrode active material layer AML1 falls within the range above, a battery may have an increased lifespan and a small or minimum change in volume during charging and discharging.

The thickness TKL1 of the first active material layer ATL1 may range from $\geq 10\,\mu m$ to $\leq 150\,\mu m$. For example, the thickness TKL1 of the first active material layer ATL1 may be equal to or greater than about $15\,\mu m$, $20\,\mu m$, $30\,\mu m$, or $40\,\mu m$. For example, the thickness TKL1 of the first active material layer ATL1 may be equal to or less than about $140\,\mu m$, $130\,\mu m$, $120\,\mu m$, $110\,\mu m$, $100\,\mu m$, $90\,\mu m$, $80\,\mu m$, $70\,\mu m$, $60\,\mu m$, $50\,\mu m$, or $40\,\mu m$.

The thickness TKL2 of the second active material layer ATL2 may range from $\geq 10\,\mu m$ to $\leq 150\,\mu m$. For example, the thickness TKL2 of the second active material layer ATL2 may be equal to or greater than about $15\,\mu m$, $20\,\mu m$, $30\,\mu m$, or $40\,\mu m$. For example, the thickness TKL2 of the second active material layer ATL2 may be equal to or less than about $140\,\mu m$, $130\,\mu m$, $120\,\mu m$, $110\,\mu m$, $100\,\mu m$, $90\,\mu m$, $80\,\mu m$, $70\,\mu m$, $60\,\mu m$, $50\,\mu m$, or $40\,\mu m$.

When the thickness TKL1 of the first active material layer ATL1 falls within the range above, and when the thickness TKL2 of the second active material layer ATL2 falls within the range above, a battery may have an increased lifespan and a small or minimum change in volume during charging and discharging.

In an example embodiment, an increase in weight of a positive electrode active material included in the first active material layer ATL1 may cause an increase in the thickness TKL1 of the first active material layer ATL1. In an example embodiment, an increase in weight of a positive electrode active material included in the second active material layer ATL2 may cause an increase in the thickness TKL2 of the second active material layer ATL2.

The first active material layer ATL1 and the second active material layer ATL2 may have a thickness ratio (TKL1:TKL2) ranging from about 1:9 to about 9:1. For example, the first active material layer ATL1 and the second active material layer ATL2 may have a thickness ratio (TKL1:TKL2) of about 5:5. When the thickness ratio (TKL1:TKL2) of the first active material layer ATL1 and the second active material layer ATL2 falls within the range above, the positive electrode active material layer AML1 may have an improved adhesive force to the current collector COL1, and it may thus be possible not only to improve or maximize battery capacity and energy density, but also to facilitate an electrode plating process.

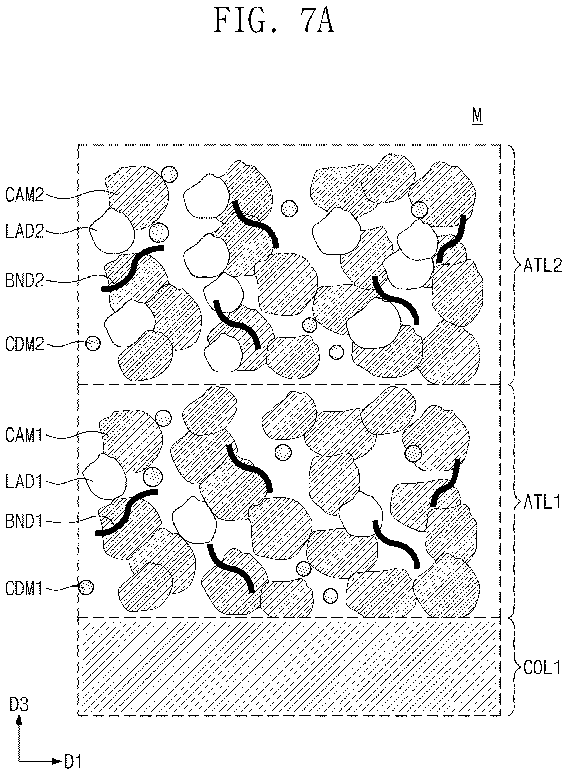

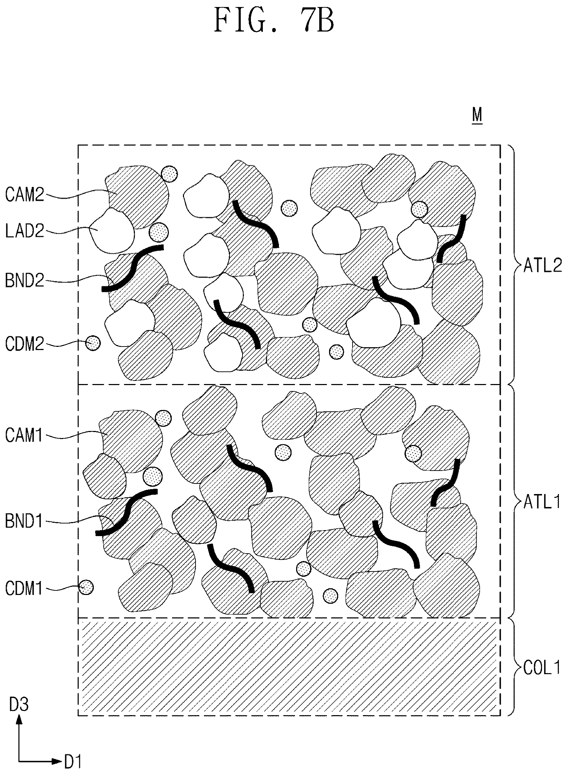

FIGS. 7A and 7B are enlarged views illustrating a positive electrode according to an example embodiment of the present disclosure. FIGS. 7A and 7B show an enlarged view of section "M" depicted in FIG. 6.

Referring to FIGS. 7A and 7B, the first active material layer ATL1 may include a first positive electrode active material CAM1, a first lithium-based additive LAD1, a first binder BND1, and a first conductive material CDM1.

The first lithium-based additive LAD1 may improve the capacity of a positive electrode even in relatively small amounts thereof, and simultaneously or contemporaneously may compensate for the efficiency loss of a negative electrode including a silicon-based active material.

The first lithium-based additive LAD1 may include at least one of a compound represented by Chemical Formula 1-1, a compound represented by Chemical Formula 1-2, and a compound represented by Chemical Formula 1-3.

$$\text{Chemical Formula 1-1:} \qquad Li_{x1}NiO_2$$

$$\text{Chemical Formula 1-2:} \qquad Li_{x2}FeO_4$$

$$\text{Chemical Formula 1-3:} \qquad Li_{x3}Co_{(1-y-z-m)}Zn_yAl_zM_mO_4$$

In Chemical Formula 1-1, the subscript x may satisfy the relationship of $1.1 \leq x1 \leq 2.5$.

In Chemical Formula 1-2, the subscript x may satisfy the relationship of $1.1 \leq x2 \leq 5.5$.

In Chemical Formula 1-3, M may be or include at least one of Ti, Zr, Mn, or Ni, and the subscripts x3, z, and m may satisfy the relationship of $5 \leq x3 \leq 7$, $0<y \leq 0.5$, $0<z \leq 0.5$, $0<y+z+m<1$, and $0 \leq m \leq 0.5$.

In Chemical Formula 1-1, the subscript x1 may range from $\geq 1.1$ to $\leq 2.5$, from $\geq 1.5$ to $\leq 2$, from $\geq 2$ to $\leq 2.5$, or from $\geq 1.8$ to $\leq 2.3$. For example, x1 may be equal to about 2.

In Chemical Formula 1-2, the subscript x2 may range from $\geq 1.1$ to $\leq 5.5$, from $\geq 2.5$ to $\leq 5.5$, from $\geq 3$ to $\leq 5.5$, or from $\geq 3.3$ to $\leq 5.3$. For example, x2 may be equal to about 5.

When M is present in Chemical Formula 1-3, M may be or include at least one of Ti, Zr, Mn, or Ni. For example, M may be or include Zr.

When m is equal to 0, Chemical Formula 1-3 may be expressed as Chemical Formula 1-3A.

$$\text{Chemical Formula 1-3A:} \qquad Li_{x3}CO_{(1-y-z-m)}Zn_yAl_zO_4$$

According to an example embodiment, the first lithium-based additive LAD1 may include at least one of LNO ($Li_2NiO_2$), LFO ($Li_5FeO_4$), or LCZAO ($Li_6C_{00.7}Zn_{0.25}Al_{0.05}O_4$).

The first lithium-based additive LAD1 may have an average particle diameter ($D_{50}$) in a range of $\geq 1 \mu m$ to $\leq 50 \mu m$. For example, the first lithium-based additive LAD1 may have an average particle diameter ($D_{50}$) that is equal to or less than about 45 $\mu m$, 40 $\mu m$, or 35 $\mu m$. For example, the first lithium-based additive LAD1 may have an average particle diameter ($D_{50}$) in a range of $\geq 1 \mu m$ to $\leq 45 \mu m$, $\geq 2 \mu m$ to $\leq 40 \mu m$, or $\geq 5 \mu m$ to $\leq 30 \mu m$. The average particle diameter ($D_{50}$) may be a median diameter measured with a laser-type particle size distribution analyzer.

Unless otherwise specially defined in this description, a particle diameter may be an average particle diameter. In addition, a particle diameter indicates an average particle diameter (D50), which refers to the diameter of particles at a cumulative volume of about 50 vol% in particle size distribution. The average particle diameter (D50) may be measured by a method known to those skilled in the art, for example, by a particle size analyzer, or by using a transmission electron microscope (TEM) image or a scanning electron microscope (SEM) image. Alternatively, the average particle diameter may be measured by a measurement device using dynamic light-scattering, wherein data analysis is conducted to count the number of particles for each particle size range, and an average particle diameter (D50) value may then be obtained through calculation. Also, a laser diffraction method may be utilized to measure the average particle diameter. In the laser diffraction method, target particles are dispersed in a dispersion medium, then introduced into a commercial laser diffraction particle diameter measurement instrument (e.g., MT3000 of Microtrac), and irradiated to ultrasonic waves of about 28 kHz at an output of about 60 W, and the average particle diameter (D50) based on about 50% of particle diameter distribution may be calculated in the measurement instrument.

As illustrated in FIG. 7A, an amount of the first lithium-based additive LAD1 in the first active material layer ATL1 may be less than the amount of a second lithium-based additive LAD2 in a second active material layer ATL2, which is discussed below.

Alternatively, as illustrated in FIG. 7B, the first lithium-based additive LAD1 may not be included in the first active material layer ATL1. In this case, the first active material layer ATL1 may have a zero amount of the first lithium-based additive LAD1.

For example, the first lithium-based additive LAD1 may be present in an amount in a range of $\geq 0$ wt% to $\leq 5$ wt% in the first active material layer ATL1.

According to an example embodiment, in the first active material layer ATL1, the first positive electrode active material CAM1 and the first lithium-based additive LAD1 may be included in a weight ratio in a range of about 95:5 to about 100:0.

The first lithium-based additive LAD1 may be included in an amount that is equal to or less than about 5 parts by weight relative to 100 parts by weight of the first positive electrode active material CAM1. For example, the first lithium-based additive LAD1 may be included in an amount that is equal to or less than about 4 parts by weight, 2 parts by weight, 1 part by weight, or 0.8 parts by weight relative to 100 parts by weight of the first positive electrode active material CAM1.

When an amount of the first lithium-based additive LAD1 in the first active material layer ATL1 is greater than the range above, an internal resistance of a positive electrode may be increased due to side reactions.

The first positive electrode active material CAM1 may include a compound (e.g., lithiated intercalation compound) that can reversibly intercalate and deintercalate lithium. The first positive electrode active material CAM1 may include a lithium composite oxide represented by Chemical Formula 2.

$$\text{Chemical Formula 2:} \qquad Li_{x4}M^1_yM^2_zM^3_{1-y-z}O_{2-a}X_a$$

In Chemical Formula 2,

The subscripts x4, a, y, and z may satisfy the relationship of $0.5 \leq x4 \leq 1.8$, $0 \leq a \leq 0.05$, $0 < y \leq 1$, $0 \leq z \leq 1$, and $0 \leq y+z \leq 1$, $M^1$, $M^2$, and $M^3$ may each independently include at least one of Ni, Co, Mn, Al, B, Ba, Ca, Ce, Cr, Fe, Mo, Nb, Si, Sr, Mg, Ti, V, W, Zr, La, and a combination thereof, and
X may include at least one of F, S, P, and Cl.

In an example embodiment, in Chemical Formula 2, $M^1$ may be or include Ni, and the subscripts y and z may satisfy the relationship of $0.8 \leq y \leq 1$ and $0 \leq z \leq 0.2$. For example, the first positive electrode active material CAM1 may include LMFP (lithium manganese iron phosphate, $LiFeP_4$), NMX (nickel manganese oxide, $NiMnO_2$), NCA (lithium nickel cobalt aluminum oxide, $LiNiCoAl_2$), or NCM (lithium nickel cobalt manganese oxide, $LiNiCoMn_2$).

The first binder BND1 may be configured to bind not only particles of the first positive electrode active material CAM1 to each other, but also to improve attachment of positive electrode active materials to a current collector, and for example, may include at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-including polymer, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, or nylon, but the present disclosure is not limited thereto.

The first conductive material CDM1 may be included to provide the positive electrode 10 with conductivity, and any suitable conductive material that does not cause a chemical change in a battery may be included as a conductive material, for example, a carbon-based material such as at least one of natural graphite, artificial graphite, carbon black, acetylene black, Ketjen black, or carbon fiber; a metallic material such as a metal powder or metal fiber including one or more of copper, nickel, aluminum, and silver; a conductive polymer such as a polyphenylene derivative; or a mixture thereof.

According to an example embodiment, the first positive electrode active material CAM1 may be present in an amount in a range of $\geq 90$ wt% to $\leq 98$ wt% relative to the total weight of the first active material layer ATL1. According to an example embodiment, the first binder BND1 may be present in an amount in a range of $\geq 1$ wt% to $\leq 5$ wt% relative to the total weight of the first active material layer ATL1. According to an example embodiment, the first conductive material CDM1 may be present in an amount in a range of $\geq 1$ wt% to $\leq 5$ wt% relative to the total weight of the first active material layer ATL1.

When the first active material layer ATL1 satisfies the amount range of the first positive electrode active material CAM1, the amount range of the first binder BND1, and the amount range of the first conductive material CDM1, it may be possible to improve or maximize battery capacity and energy density.

A second active material layer ATL2 may be formed to contact one surface of the first active material layer ATL1. The one surface of the first active material layer ATL1 may be a surface where the first active material layer ATL1 is not in contact with the current collector (see COL1 of FIG. 6). For example, the current collector COL1, the first active material layer ATL1, and the second active material layer ATL2 may be stacked, e.g., sequentially stacked.

The second active material layer ATL2 may include a second positive electrode active material CAM2, a second lithium-based additive LAD2, a second binder BND2, and a second conductive material CDM2.

The second positive electrode active material CAM2 may be the same, or substantially the same, as the first positive electrode active material CAM1 discussed above in the first active material layer ATL1. The second binder BND2 may be the same, or substantially the same, as the first binder BND1 discussed above in the first active material layer ATL1. The second conductive material CDM2 may be the same, or substantially the same, as the first conductive material CDM1 discussed above in the first active material layer ATL1.

According to an example embodiment, the second positive electrode active material CAM2 may be present in an amount in a range of $\geq$ 90 wt% to $\leq$ 98 wt% relative to the total weight of the second active material layer ATL2. According to an example embodiment, the second binder BND2 may be present in an amount in a range of $\geq$ 1 wt% to $\leq$ 5 wt% relative to the total weight of the second active material layer ATL2. According to an example embodiment, the second conductive material CDM2 may be present in an amount in a range of $\geq$ 1 wt% to $\leq$ 5 wt% relative to the total weight of the second active material layer ATL2.

When the second active material layer ATL2 satisfies the amount range of the second positive electrode active material CAM2, the amount range of the second binder BND2, and the amount range of the second conductive material CDM2, it may be possible to improve or maximize battery capacity and energy density.

The second lithium-based additive LAD2 may be the same, or not the same, as the first lithium-based additive LAD1 discussed above in the first active material layer ATL1.

As illustrated in FIGS. 7A and 7B, an amount of the second lithium-based additive LAD2 in the second active material layer ATL2 may be greater than the amount of the first lithium-based additive LAD1 in the first active material layer ATL1. According to an example embodiment, an amount of the second lithium-based additive LAD2 in the second active material layer ATL2 may be equal to or greater than twice the amount of the first lithium-based additive LAD1 in the first active material layer ATL1.

For example, the second lithium-based additive LAD2 may be present in an amount in a range of $\geq$ 1 wt% to $\leq$ 10 wt% in the second active material layer ATL2. According to an example embodiment, in the second active material layer ATL2, the second positive electrode active material CAM2 and the second lithium-based additive LAD2 may be included in a weight ratio in a range of about 90:10 to about 99: 1.

The second lithium-based additive LAD2 may be included in an amount in a range of $\geq$ 1 part by weight to $\leq$ 10 parts by weight relative to 100 parts by weight of the second positive electrode active material CAM2. For example, the second lithium-based additive LAD2 may be included in an amount that is equal to or less than about 8 parts by weight, 7 parts by weight, 6 parts by weight, or 5 parts by weight relative to 100 parts by weight of the second positive electrode active material CAM2.

When an amount of the second lithium-based additive LAD2 in the second active material layer ATL2 is greater than the range above, an internal resistance of a positive electrode may increase, which may reduce stability and performance of the battery.

When an amount of the second lithium-based additive LAD2 in the second active material layer ATL2 is equal to zero, or is less than the range above, it may be challenging to improve or maximize an effect of improving energy density of a battery.

The lithium-based additives LAD1 and LAD2 may have a disadvantage where an increase in silicon amount (e.g., about 5 wt% or higher) in a negative electrode may cause increased side reactions and gas generation, which may lead to reduced efficiency. The positive electrode 10 according to an example embodiment of the present disclosure may address this disadvantage.

In the positive electrode 10 according to an example embodiment of the present disclosure, as the first active material layer ATL1 is introduced between the current collector COL1 and the second active material layer ATL2, and as the first and second lithium-based additives LAD1 and LAD2 are mixed in corresponding desired ratios in the first active material layer ATL1 and the second active material layer ATL2, a battery may improve in capacity, density characteristics, high-temperature stability, and lifespan properties. For example, in the positive electrode 10 according to an example embodiment of the present disclosure, the second active material layer ATL2 may include the second lithium-based additive LAD2 in an amount that is greater than the amount of the first lithium-based additive LAD1 in the first active material layer ATL1, and thus usage efficiency may be improved or maximized while reducing or minimizing an addition amount of the lithium-based additives LAD1 and LAD2. Simultaneously or contemporaneously, the positive electrode active materials CAM1 and CAM2 may be supplemented with lithium to achieve high capacity and high energy density.

According to an example embodiment, a sum of the weight of the first lithium-based additive LAD1 and the weight of the second lithium-based additive LAD2 may be in a range of $\geq$ 1% to $\leq$ 10% of the total weight of the positive electrode active material layer AML1.

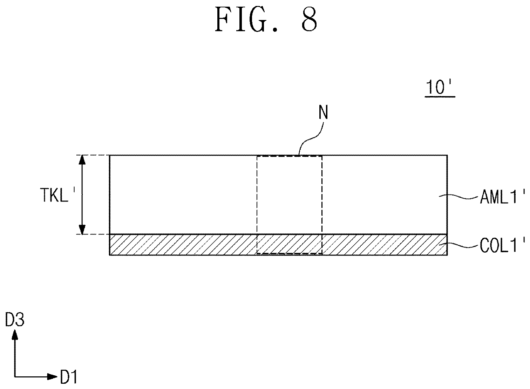

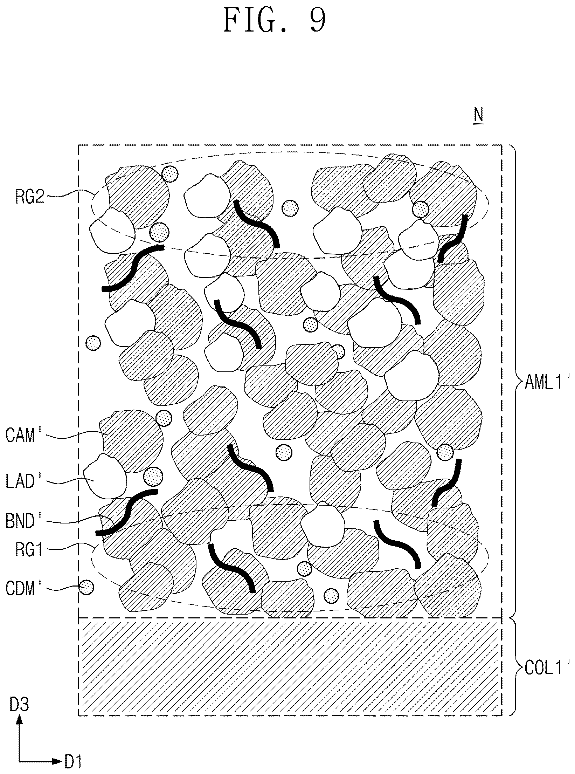

FIG. 8 is an enlarged view illustrating a positive electrode according to an example embodiment of the present disclosure. FIG. 9 is an enlarged view illustrating section "N" of FIG. 8. In the example embodiment that follows, a detailed description of technical features that are redundant to the technical features discussed above with reference to FIGS. 6 and 7A is omitted, and a difference thereof is discussed in detail.

Referring to FIGS. 8 and 9, a positive electrode 10' according to an example embodiment of the present disclosure may include a single-layered positive electrode active material layer AML1'.

The positive electrode 10' may include a current collector COL1' and a positive electrode active material layer AML1' formed on the current collector COL1'.

In an example embodiment, aluminum (Al) may be included as the current collector COL1', but the present disclosure is not limited thereto.

The positive electrode active material layer AML1' may be formed to contact one surface of the current collector COL1'. The one surface of the positive electrode active material layer AML1' may be a surface where the positive electrode active material layer AML1' is in contact with the current collector COL1'. For example, the positive electrode 10' may be configured such that the current collector COL1' and the positive electrode active material layer AML1' are stacked, e.g., sequentially stacked.

The positive electrode active material layer AML1' may be provided on the current collector COL1' and may have a thickness TKL'. For example, the thickness TKL' of the positive electrode active material layer AML1' may range from $\geq 10$ $\mu$m to $\leq 170$ $\mu$m.

The positive electrode active material layer AML1' may include a positive electrode active material CAM', a lithium-based additive LAD', a binder BND', and a conductive material CDM'.

The positive electrode active material CAM' may be substantially the same as the first positive electrode active material CAM1 discussed above. The binder BND' may be substantially the same as the first binder BND1 discussed above. The conductive material CDM' may be substantially the same as the first conductive material CDM1 discussed above. The lithium-based additive LAD' may be substantially the same as the first lithium-based additive LAD1 discussed above.

According to an example embodiment, the positive electrode active material CAM' may be present in an amount in a range of $\geq 90$ wt% to $\leq 98$ wt% relative to the total weight of the positive electrode active material layer AML1'. According to an example embodiment, the binder BND' may be present in an amount in a range of $\geq 1$ wt% to $\leq 5$ wt% relative to the total weight of the positive electrode active material layer AML1'. According to an example embodiment, the conductive material CDM' may be present in an amount in a range of $\geq 1$ wt% to $\leq 5$ wt% relative to the total weight of the positive electrode active material layer AML1'.

When the positive electrode active material layer AML1' satisfies the amount range of the positive electrode active material CAM', the amount range of the binder BND', and the amount range of the conductive material CDM', it may be possible to improve or maximize battery capacity and energy density.

According to an example embodiment, the lithium-based additive LAD' may be present in an amount in a range of $\geq 1$ wt% to $\leq 10$ wt% relative to the total weight of the positive electrode active material layer AML1'.

The positive electrode active material layer AML1' may include a first portion RG1 adjacent to the current collector COL1' and a second portion RG2 adjacent to a surface of the positive electrode active material layer AML1'. For example, the first portion RG1 may be a region where the positive electrode active material layer AML1' is in contact with the current collector COL1'. The second portion RG2 may be a region where the positive electrode active material layer AML1' is not in contact with the current collector COL1'.

In the positive electrode active material layer AML1', an amount of the lithium-based additive LAD' in the second portion RG2 may be greater than the amount of the lithium-based additive LAD' in the first portion RG1. According to an example embodiment, in the positive electrode active material layer AML1', an amount of the lithium-based additive LAD' in the second portion RG2 may be greater than twice the amount of the lithium-based additive LAD' in the first portion RG1.

In the first portion RG1, the lithium-based additive LAD' may be present in an amount in a range of $\geq 0$ wt% to $\leq 5$ wt%. For example, the first portion RG1 may or may not include the lithium-based additive LAD'. According to an example embodiment, in the first portion RG1, the positive electrode active material CAM' and the lithium-based additive LAD' may be included in a weight ratio in a range of about 95:5 to about 100:0.

The lithium-based additive LAD' may be included in an amount that is equal to or less than about 5 parts by weight relative to 100 parts by weight of the positive electrode active material CAM'. For example, the lithium-based additive LAD' may be included in an amount that is equal to or less than about 4 parts by weight, 2 parts by weight, 1 part by weight, or 0.8 parts by weight relative to 100 parts by weight of the positive electrode active material CAM'.

When an amount of the lithium-based additive LAD' in the first portion RG1 is greater than the range above, an internal resistance of a positive electrode may be increased due to side reactions.

In the second portion RG2, the lithium-based additive LAD' may be present in an amount in a range of $\geq 1$ wt% to $\leq 10$ wt%. According to an example embodiment, in the second portion RG2, the positive electrode active material CAM' and the lithium-based additive LAD' may be included in a weight ratio in a range of about 90:10 to about 99:1.

The lithium-based additive LAD' may be included in an amount in a range of $\geq 1$ part by weight to $\leq 10$ parts by weight relative to 100 parts by weight of the positive electrode active material CAM'. For example, the lithium-based additive LAD' may be included in an amount that is equal to or less than about 8 parts by weight, 7 parts by weight, 6 parts by weight, or 5 parts by weight relative to 100 parts by weight of the positive electrode active material CAM'.

When an amount of the lithium-based additive LAD' in the second portion RG2 is greater than the range above, a battery may decrease in stability, capacity, and performance.

When an amount of the second lithium-based additive LAD2 in the second portion RG2 is equal to zero or less than the range above, it may be difficult to improve or maximize an effect of improving energy density of a battery.

When the positive electrode active material layer AML1' is present in the form of a single layer in the positive electrode 10', the lithium-based additive LAD' is distributed in a larger amount in the second portion RG2 than in the first portion RG1, and thus it may be possible to improve side reactions that may occur in the single-layered positive electrode active material layer AML1'.

**In** an example embodiment of the present disclosure, a rechargeable lithium battery may be provided which includes the positive electrode discussed above, a negative electrode including a negative electrode active material, a separator interposed between the positive electrode and the negative electrode, and an electrolyte.

The negative electrode may include a negative electrode current collector and a negative electrode active material layer including a negative electrode active material formed on the negative electrode current collector.

The negative electrode active material may include a material that can reversibly intercalate and deintercalate lithium ions, lithium metal, a lithium metal alloy, a material that can dope and de-dope lithium, or transition metal oxide.

The negative electrode active material may include a silicon-based oxide that has increased capacity, is capable of increasing energy density of battery, and enables highpower performance.

When silicon-based oxide is included as the negative electrode active material, the negative electrode active material may include at least one of a carbon-based active material and a silicon-based active material.

The carbon-based active material and the silicon-based active material may be included in a weight ratio in a range of about 95:5 to about 10:90. According to an example embodiment, the silicon-based active material may be present in an amount in a range of $\geq 5$ wt% to $\leq 10$ wt% relative to the total weight of the negative electrode active material.

The silicon-based active material may include at least one of a Si-C composite, $SiO_2$ (where $0<x\leq2$), and a silicon alloy. For example, the Si-C composite may include a core including crystalline carbon and silicon particles, and may also include an amorphous carbon coating layer on a surface of the core. The crystalline carbon may include graphite, for example, natural graphite, artificial graphite, or a mixture thereof.

The electrolyte may be prepared by a mixing process in which a lithium salt is dissolved in a non-aqueous organic solvent, and the additive may be added thereto. The electrolyte mixing process is known in the electrolyte fabrication field, and a person skilled in the art is likely able to appropriately select and use.

In an example embodiment, the non-aqueous organic solvent may include at least one of ethylmethyl carbonate (EMC), ethylene carbonate (EC), dimethyl carbonate (DMC), propylene carbonate (PC), propyl propionate (PP), diethyl carbonate (DEC), dipropyl carbonate (DPC), methylpropyl carbonate (MPC), ethylpropyl carbonate (EPC), methylethyl carbonate (MEC), and butylene carbonate (BC).

In an example embodiment, the lithium salt may include at least one of $LiPF_6$, $LiClO_4$, $LiBF_4$, lithium bis(fluorosulfonyl)imide (LiFSI), lithium bis(trifluoromethanesulfonyl)imide (LiTFSI), $LiSO_3CF_3$, LiBOB, LiFOB, LiDFBP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, $Li(FSO_2)_2N$, and $LiC_4F_9SO_3$.

In an example embodiment, the lithium salt may have a concentration in a range of $\geq 0.1$ M to $\leq 2.0$ M. For example, the lithium salt may have a concentration that is equal to or greater than about 0.5 M or 1.0 M. The lithium salt may have a concentration that is equal to or less than about 2.0 M, 1.7 M, or 1.5 M. In the present disclosure, when the lithium salt has a concentration in a range of $\geq 0.1$ M to $\leq 2.0$ M, the electrolyte may maintain a conductivity and viscosity thereof.

Manufacture of Positive Electrode

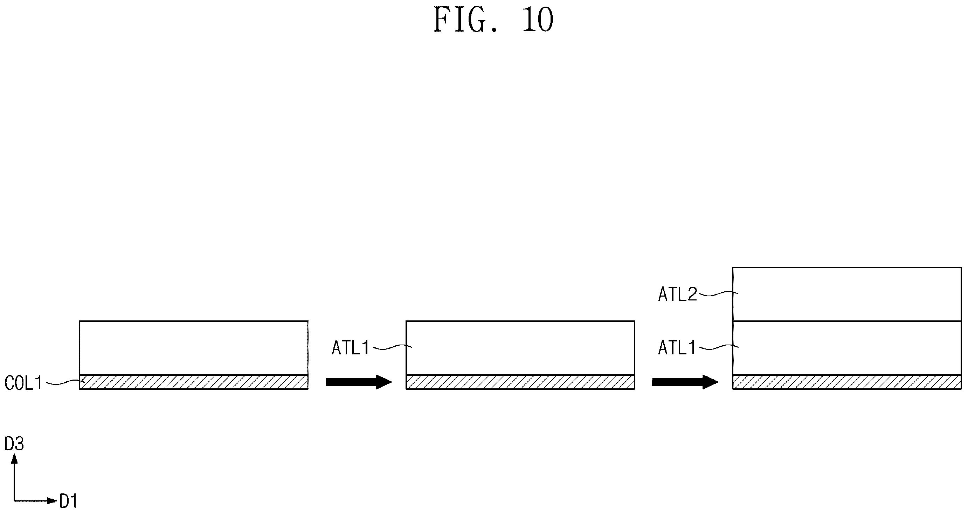

FIG. 10 is a diagram illustrating a method of manufacturing a positive electrode according to an example embodiment of the present disclosure.

Referring to FIG. 10, a method of manufacturing a positive electrode according to an example embodiment of the present disclosure may include providing a current collector COL1, forming a first active material layer ATL1 on the current collector COL1, and forming a second active material layer ATL2 on the first active material layer ATL1.

In an example embodiment, as discussed above with respect to FIG. 7A, the first active material layer ATL1 may include a first positive electrode active material CAM1, a first lithium-based additive LAD1, a first binder BND1, and a first conductive material CDM1. In addition, as discussed above with respect to FIG. 7A, the second active material layer ATL2 may include a second positive electrode active material CAM2, a second lithium-based additive LAD2, a second binder BND2, and a second conductive material CDM2.

The current collector COL1, the first active material layer ATL1, and the second active material layer ATL2 are the same, or substantially the same, as those of the positive electrode 10 according to an example embodiment, and thus a detailed description thereof is omitted below.

In an example embodiment, at least one of the formation of the first active material layer ATL1 and the formation of the second active material layer ATL2 may include performing a wet process or a dry process. In an example embodiment, the first active material layer ATL1 may be formed by a wet process, and the second active material layer ATL2 may be formed by a dry process. Alternatively, the first active material layer ATL1 may be formed by a dry process, and the second active material layer ATL2 may be formed by a wet process. The present disclosure, however, is not limited thereto.

The wet process may be performed in such a way that a positive electrode active material, a conductive material, a binder, and a lithium-based additive, are mixed in a solvent to prepare a positive electrode mixture, and that the mixture is coated on a current collector, and subsequently dried and pressed. The solvent in the slurry may be or include a commonly included solvent in the art, and for example, may include at least one of dimethyl sulfoxide (DMSO), isopropyl alcohol, N-methylpyrrolidone (NMP), acetone, water, and a combination thereof.

The dry process may be performed in such a way that a dry positive electrode active material, a dry conductive material, a dry binder, and a dry lithium-based additive are dry-mixed without a solvent to prepare a positive electrode mixture, and that the mixture is disposed and pressed on a current collector.

Afterwards, the positive electrode manufactured through the aforementioned procedure may undergo, e.g., sequentially undergo, a roll pressing process, a slitting process, and a notching process. A positive electrode 10, a separator 30, and a negative electrode 20 may be stacked, and then an electrolyte ELL may be provided to fabricate a rechargeable lithium battery according to examples of the present disclosure.

The following describes some examples and comparative examples of the present disclosure. The following embodiments, however, are merely examples, and the present disclosure is not limited to the example embodiments discussed below.

Embodiment 1: Manufacture of Positive Electrode Including Double-Layered Active Material Layer

A positive electrode active material, a conductive material, a binder, and a lithium-based additive were dispersed in a weight ratio of 100:1:1:2 in N-methylpyrrolidone to prepare a first active material slurry.

A positive electrode active material, a conductive material, a binder, and a lithium-based additive were dispersed in a weight ratio of 100:1:1:5 in N-methylpyrrolidone to prepare a second active material slurry.

A mixture of LMFP ($LiMnFePO_4$) and NMX ($NiMnO_2$) was used as the positive electrode active material, carbon black was used as the conductive material, and polyvinylidenefluoride (PVdF) was used as the binder. $Li_2NiO_2$ was used as the lithium-based additive.

The first active material slurry was coated and dried on a positive electrode current collector, or an aluminum (Al) foil of 15 $\mu$m in thickness, to form a first active material layer of about 30 $\mu$m in thickness. The second active material slurry was coated and dried on the first active material layer to form a second active material layer of about 30 $\mu$m in thickness. A roll pressing was performed to manufacture a positive electrode in which the aluminum current collector, the first active material layer, and the second active material layer were sequentially stacked.

Fabrication of Rechargeable Lithium Battery

98 wt% of a negative electrode active material in which graphite and silicon composite were mixed in a weight ratio of 92:8, 1 wt% of styrene-butadiene rubber (SBR), and 1 wt% of carboxymethylcellulose (CMC) were mixed and added to distilled water, and a mechanical agitator was utilized to stir the mixture for 60 minutes to prepare a negative electrode active material slurry. A doctor blade was utilized to coat the slurry of 60 $\mu$m in thickness was coated on a copper current collector of 10 $\mu$m in thickness, dried in a hot-air drier for 0.5 hours at 100°C, dried again for 4 hours at 120°C under a vacuum condition, and then roll-pressed to manufacture a negative electrode.

1.15 M of $LiPF_6$ was dissolved in a non-aqueous organic solvent including ethylene carbonate (EC), ethylmethyl carbonate (EMC), and dimethyl carbonate (DMC) mixed in a volume ratio of 20:40:40 to prepare an electrolyte.

The positive electrode, the negative electrode, and a polyethylene separator of 16 $\mu$m in thickness were assembled to manufacture an electrode assembly, and the electrolyte was introduced to fabricate a rechargeable lithium battery.

Embodiment 2

A positive electrode and a rechargeable lithium battery were fabricated in the same method as in Embodiment 1, with a difference that the lithium-based additive was not used when the first active material slurry was prepared, and that the positive electrode active material, the conductive material, and the binder were mixed in a weight ratio of 100:1:1 in the first active material slurry.

Embodiment 3

A positive electrode and a rechargeable lithium battery were fabricated in the same method as in Embodiment 1, with a difference that the positive electrode active material, the conductive material, the binder, and the lithium-based additive were mixed in a weight ratio of 100:1:1:10 in the second active material slurry when the positive electrode was manufactured.

Embodiment 4

A positive electrode and a rechargeable lithium battery were fabricated in the same method as in Embodiment 1, with a difference that $Li_2NiO_2$ was replaced with $Li_5FeO_4$ as the lithium-based additive when the positive electrode was manufactured.

Embodiment 5

A positive electrode and a rechargeable lithium battery were fabricated in the same method as in Embodiment 1, with a difference that $Li_2NiO_2$ was replaced with $Li_6Co_{0.7}Zn_{0.25}Al_{0.05}O_4$ as the lithium-based additive when the positive electrode was manufactured.

Comparative 1: Manufacture of Positive Electrode Including Single-Layered Active Material Layer

A positive electrode active material, a conductive material, a binder, and a lithium-based additive were dispersed in a weight ratio of 100:1:1:2 in N-methylpyrrolidone to prepare a first active material slurry.
A mixture of LMFP ($LiMnFePO_4$) and NMX ($NiMnO_2$) was used as the positive electrode active material, carbon black was used as the conductive material, and polyvinylidenefluoride (PVdF) was used as the binder. $Li_2NiO_2$ was used as the lithium-based additive.
The first active material slurry was coated and dried on a positive electrode current collector, or an aluminum (Al) foil of 15 $\mu$m in thickness, to form a first active material layer of about 30 $\mu$m in thickness. A roll pressing was performed to manufacture a positive electrode in which the aluminum current collector and the first active material layer were sequentially stacked.
The same method as in Embodiment 1 was employed such that the positive electrode manufactured in Comparative 1 was used to fabricate a rechargeable lithium battery.

Comparative 2

A positive electrode and a rechargeable lithium battery were fabricated in the same method as in Embodiment 1, with a difference that the positive electrode active material, the conductive material, the binder, and the lithium-based additive were mixed in a weight ratio of 100:1:1:5 in the first active material slurry when the positive electrode was manufactured, and that the positive electrode active material, the conductive material, and the binder were mixed in a weight ratio of 100:1:1 in the second active material slurry during its preparation without addition of the lithium-based additive.

Comparative 3

A positive electrode and a rechargeable lithium battery were fabricated in the same method as in Embodiment 1, with a difference that the positive electrode active material, the conductive material, the binder, and the lithium-based additive were mixed in a weight ratio of 100:1:1:5 in the first active material slurry when the positive electrode was manufactured, and that the positive electrode active material, the conductive material, the binder, and the lithium-based additive were mixed in a weight ratio of 100:1:1:2 in the second active material slurry when the positive electrode was manufactured.

Comparative 4

A positive electrode and a rechargeable lithium battery were fabricated in the same method as in Embodiment 1, with a difference that the positive electrode active material, the conductive material, the binder, and the lithium-based additive were mixed in a weight ratio of 100: 1: 3 in the first active material slurry when the positive electrode was manufactured, and that the positive electrode active material, the conductive material, the binder, and the lithium-based additive were mixed in a weight ratio of 100:1:1:3 in the second active material slurry when the positive electrode was manufactured.

Comparative 5

A positive electrode and a rechargeable lithium battery were fabricated in the same method as in Embodiment 1, with a difference that the positive electrode active material, the conductive material, the binder, and the lithium-based additive were mixed in a weight ratio of 100: 1: 1:2 in the first active material slurry when the positive electrode was manufactured, and that the positive electrode active material, the conductive material, the binder, and the lithium-based additive were mixed in a weight ratio of 100:1:1:20 in the second active material slurry when the positive electrode was manufactured.

Table 1 below lists compositions of the positive electrodes according to the examples and the comparative examples.

Table 1:

| Category | | Amount of LMFP + LMX (part by weight) | Amount of carbon black (part by weight) | Amount of PVdF (part by weight) | Amount of lithium-based additive (part by weight) |
|---|---|---|---|---|---|
| Embodiment 1 | 1st active material layer | 100 | 1 | 1 | 2 ($Li_2NiO_2$) |
| | 2nd active material layer | 100 | 1 | 1 | 5 ($Li_2NiO_2$) |
| Embodiment 2 | 1st active material layer | 100 | 1 | 1 | - |
| | 2nd active material layer | 100 | 1 | 1 | 5 ($Li_2NiO_2$) |
| Embodiment 3 | 1st active material layer | 100 | 1 | 1 | 2 ($Li_2NiO_2$) |
| | 2nd active material layer | 100 | 1 | 1 | 10 ($Li_2NiO_2$) |
| Embodiment 4 | 1st active material layer | 100 | 1 | 1 | 2 ($Li_5FeO_4$) |
| | 2nd active material layer | 100 | 1 | 1 | 5 ($Li_5FeO_4$) |
| Embodiment 5 | 1st active material layer | 100 | 1 | 1 | 2 ($Li_6Co_{0.7}Zn_{0.25}Al_{0.05}O_4$) |
| | 2nd active material layer | 100 | 1 | 1 | 5 ($Li_6Co_{0.7}Zn_{0.25}Al_{0.05}O_4$) |
| Comparative 1 | 1st active material layer | 100 | 1 | 1 | 5 ($Li_2NiO_2$) |
| | 2nd active material layer | - | - | - | - |
| Comparative 2 | 1st active material layer | 100 | 1 | 1 | 5 ($Li_2NiO_2$) |
| | 2nd active material layer | 100 | 1 | 1 | - |

(continued)

| Category | | Amount of LMFP + LMX (part by weight) | Amount of carbon black (part by weight) | Amount of PVdF (part by weight) | Amount of lithium-based additive (part by weight) |
|---|---|---|---|---|---|
| Comparative 3 | 1st active material layer | 100 | 1 | 1 | 5 ($Li_2NiO_2$) |
| | 2nd active material layer | 100 | 1 | 1 | 2 ($Li_2NiO_2$) |
| Comparative 4 | 1st active material layer | 100 | 1 | 1 | 3 ($Li_2NiO_2$) |
| | 2nd active material layer | 100 | 1 | 1 | 3 ($Li_2NiO_2$) |
| Comparative 5 | 1st active material layer | 100 | 1 | 1 | 2 ($Li_2NiO_2$) |
| | 2nd active material layer | 100 | 1 | 1 | 20 ($Li_2NiO_2$) |

Evaluation Example

The rechargeable lithium battery was evaluated by the following methods.

Evaluation 1: Charge-Discharge Cycle Characteristics

For each of the rechargeable lithium batteries fabricated in the examples and the comparative examples, after a charge-discharge cycle was executed 300 times under the conditions of 25C, 0.5 C charge (CC/CV, 4.25 V, 0.05 C cut-off) / 0.5 C discharge (CC, 2.8 V cut-off), a discharge capacity was measured to calculate a capacity retention rate, and the result was shown in Table 2 below. The capacity retention rate was calculated according to Equation 1 below.

Capacity retention rate (%) = (discharge capacity after 300 cycles / initial discharge capacity) $\times$ 100          Equation 1:

Table 2:

| Category | Capacity retention rate (%) |
|---|---|
| Comparative 1 | 85.6 |
| Comparative 2 | 89.0 |
| Comparative 3 | 87.2 |
| Comparative 4 | 87.2 |
| Comparative 5 | 80.0 |
| Embodiment 1 | 93.2 |
| Embodiment 2 | 93.7 |
| Embodiment 3 | 95.7 |
| Embodiment 4 | 96.5 |
| Embodiment 5 | 92.4 |

Evaluation 2: Gas Generation

The rechargeable lithium batteries according to the examples and the comparative examples underwent evaluation of gas generation characteristics. The rechargeable lithium batteries according to the examples and the comparative examples were charged to 4.2 V at 60°C and then stored for 30 days.

To ascertain an effect of gas reduction, for each of the rechargeable lithium batteries fabricated in the examples and the comparative examples, an initial gas generation, and a gas generation after being stored for 30 days were measured, and the gas generation was calculated according to Equation 2 below, and the result was listed in Table 3 below.

Equation 2: Gas generation (%) = (gas generation after 30 days / initial gas generation) $\times 100$         Equation 2:

Table 3:

| Category | Initial gas generation (mL) | Gas generation after storage for 30 days (mL) | Gas increase rate (%) |
|---|---|---|---|
| Embodiment 1 | 9.83 | 10.02 | 101.9 |
| Embodiment 2 | 8.51 | 8.59 | 101.0 |
| Embodiment 3 | 11.02 | 12.98 | 117.8 |
| Embodiment 4 | 10.04 | 11.09 | 110.5 |
| Embodiment 5 | 10.13 | 11.58 | 114.3 |
| Embodiment 6 | 10.01 | 10.78 | 107.7 |
| Comparative 1 | 10.33 | 12.63 | 122.3 |
| Comparative 2 | 10.35 | 12.49 | 120.7 |
| Comparative 3 | 10.90 | 13.09 | 120.1 |
| Comparative 4 | 10.90 | 13.09 | 120.1 |
| Comparative 5 | 30.12 | 46.72 | 155.1 |

Comprehensive Evaluation

Referring to Table 2 above, it was ascertained that the capacity retention rate based on the charge-discharge cycle at room temperature was improved in the cases (Embodiments 1 to 5), each of which used the positive electrode according the present disclosure compared to the cases where each of which used the positive electrode according to the comparative example.

Referring to Table 3 above, it was ascertained that the gas generation at a high temperature (60°C) was relatively large in the rechargeable lithium batteries fabricated according to the comparative examples, compared to the rechargeable lithium batteries fabricated according to the examples. Therefore, the rechargeable lithium batteries that use the positive electrode according to the present disclosure may effectively reduce or suppress the gas generation at a high temperature (60°C).

A positive electrode according the present disclosure may include a double-layered active material layer having different amounts of a lithium-based additive, thereby having an effect of improving lifespan characteristics thereof.

While this disclosure has been described in connection with what is presently considered to be example embodiments, it is to be understood that the present disclosure is not limited to the disclosed example embodiments, and is intended to cover various modifications and equivalent arrangements included within the spirit and scope of the appended claims, and therefore the aforementioned embodiments may be understood to be examples that do not limit this disclosure in any way.

**Claims**

**1.** A positive electrode (10) for a rechargeable lithium battery (100), wherein

    (i) the positive electrode (10) comprising:

a current collector (COL1);

a first active material layer (ATL1) on the current collector (COL1); and

a second active material layer (ATL2) on the first active material layer (ATL1),

wherein the first active material layer (ATL1) comprises a first positive electrode active material (CAM1) and a first lithium-based additive (LAD1),

wherein the second active material layer (ATL2) comprises a second positive electrode active material (CAM2) and a second lithium-based additive (LAD2),

wherein at least one of the first lithium-based additive (LAD1) and the second lithium-based additive (LAD2) comprises at least one of a compound represented by Chemical Formula 1-1, a compound represented by Chemical Formula 1-2, and a compound represented by Chemical Formula 1-3,

wherein an amount of the second lithium-based additive (LAD2) in the second active material layer (ATL2) is greater than an amount of the first lithium-based additive (LAD1) in the first active material layer (ATL1),

Chemical Formula 1-1: $Li_{x1}NiO_2$

Chemical Formula 1-2: $Li_{x2}FeO_4$

Chemical Formula 1-3: $Li_{x3}Co_{(1-y-z-m)}Zn_yAl_zM_mO_4$

wherein, in Chemical Formula 1-1, $1.1 \leq x1 \leq 2.5$,

wherein, in Chemical Formula 1-2, $1.1 \leq x2 \leq 5.5$, and

wherein, in Chemical Formula 1-3, M comprises at least one of Ti, Zr, Mn, and Ni,

$$5 \leq x3 \leq 7,\ 0<y \leq 0.5,\ 0<z \leq 0.5,\ 0<y+z+m<1,\ \text{and}\ 0 \leq m \leq 0.5;$$

or wherein.

(ii) the positive electrode (10) comprising:

a current collector (COL1); and

a positive electrode active material layer (AML1) on the current collector (COL1),

wherein the positive electrode active material layer (AML1) comprises a positive electrode active material (CAM) and a lithium-based additive (LAD),

wherein the lithium-based additive (LAD) comprises at least one of a compound represented by Chemical Formula 1-1, a compound represented by Chemical Formula 1-2, and a compound represented by Chemical Formula 1-3,

wherein the positive electrode active material layer (AML1) comprises a first portion adjacent to the current collector (COL1) and a second portion adjacent to a surface of the positive electrode active material layer (AML1),

wherein a weight of the lithium-based additive (LAD) is in a range of $\geq 1\%$ to $\leq 10\%$ of a total weight of the positive electrode active material layer (AML1),

wherein an amount of the lithium-based additive (LAD) in the second portion is greater than an amount of the lithium-based additive (LAD) in the first portion,

Chemical Formula 1-1: $Li_{x1}NiO_2$

Chemical Formula 1-2: $Li_{x2}FeO_4$

Chemical Formula 1-3: $Li_{x3}Co_{(1-y-z-m)}Zn_yAl_zM_mO_4$

wherein, in Chemical Formula 1-1, $1.1 \leq x1 \leq 2.5$,

wherein, in Chemical Formula 1-2, $1.1 \leq x2 \leq 5.5$, and

wherein, in Chemical Formula 1-3, M comprises at least one of Ti, Zr, Mn, and Ni,

$$5 \leq x3 \leq 7,\ 0<y \leq 0.5,\ 0<z \leq 0.5,\ 0<y+z+m<1,\ \text{and}\ 0 \leq m \leq 0.5.$$

2. The positive electrode (10) of claim 1, wherein at least one of the first active material layer (ATL1) and the second active material layer (ATL2) further comprises a binder (BND1; BND2) and a conductive material (CDM1; CDM2).

3. The positive electrode (10) of claim 1 or 2, wherein at least one of the first positive electrode active material (CAM1) and the second positive electrode active material (CAM2) is represented by Chemical Formula 2,

Chemical Formula 2: $Li_{x4}M^1_yM^2_zM^3_{1-y-z}O_{2-a}X_a$

wherein, in Chemical Formula 2,

$0.5 \leq x4 \leq 1.8$, $0 \leq a \leq 0.05$, $0 < y \leq 1$, $0 \leq z \leq 1$, and $0 \leq y+z \leq 1$,
$M^1$, $M^2$, and $M^3$ each independently comprise at least one of Ni, Co, Mn, Al, B, Ba, Ca, Ce, Cr, Fe, Mo, Nb, Si, Sr, Mg, Ti, V, W, Zr, La, and a combination thereof, and
X comprises at least one of F, S, P, and Cl.

4. The positive electrode (10) according to any one of claims 1 to 3, wherein at least one of the first positive electrode active material (CAM1) and the second positive electrode active material (CAM2) is represented by Chemical Formula 2,

Chemical Formula 2: $Li_{x4}M^1_yM^2_zM^3_{1-y-z}O_{2-a}X_a$

wherein, in Chemical Formula 2,

$$0.5 \leq x4 \leq 1.8,\ 0 \leq a \leq 0.05,\ 0 < y \leq 1,\ 0 \leq z \leq 1,\ \text{and}\ 0 \leq y+z \leq 1,$$

$M^1$, $M^2$, and $M^3$ each independently comprise at least one of Ni, Co, Mn, Al, B, Ba, Ca, Ce, Cr, Fe, Mo, Nb, Si, Sr, Mg, Ti, V, W, Zr, La, and a combination thereof, and
X comprises at least one of F, S, P, and Cl; and

wherein, in Chemical Formula 2, $0.8 \leq y \leq 1$, $0 \leq z \leq 0.2$, and $M^1$ comprises Ni.

5. The positive electrode (10) according to any one of claims 1 to 4, wherein a thickness ratio of the first active material layer (ATL1) to the second active material layer (ATL2) is in a range of about 1:9 to about 9:1.

6. The positive electrode (10) according to any one of claims 1 to 5, wherein:

an average particle diameter ($D_{50}$) of the first lithium-based additive (LAD1) is in a range of $\geq 1\ \mu m$ to $\leq 50\ \mu m$, and
an average particle diameter ($D_{50}$) of the second lithium-based additive (LAD2) is in a range of $\geq 1\ \mu m$ to $\leq 50\ \mu m$.

7. The positive electrode (10) according to any one of claims 1 to 6, wherein an amount of the first lithium-based additive (LAD1) in the first active material layer (ATL1) is in a range of $\geq 0$ wt% to $\leq 5$ wt%.

8. The positive electrode (10) according to any one of claims 1 to 7, wherein an amount of the second lithium-based additive (LAD2) in the second active material layer (ATL2) is in a range of $\geq 1$ wt% to $\leq 10$ wt%.

9. The positive electrode (10) according to any one of claims 1 to 8, wherein a weight ratio of the first positive electrode active material (CAM1) to the first lithium-based additive (LAD1) in the first active material layer (ATL1) is in a range of about 95:5 to about 100:0.

10. The positive electrode (10) according to any one of claims 1 to 9, wherein a weight ratio of the second positive electrode active material (CAM2) to the second lithium-based additive (LAD2) in the second active material layer (ATL2) is in a range of about 90:10 to about 99:1.

11. The positive electrode (10) according to any one of claim 1 to 10, wherein for the positive electrode (10) according to (ii) the positive electrode active material (CAM) is represented by Chemical Formula 2,

Chemical Formula 2: $Li_{x4}M^1_yM^2_zM^3_{1-y-z}O_{2-a}X_a$

wherein, in Chemical Formula 2,

$$0.5 \leq x4 \leq 1.8,\ 0 \leq a \leq 0.05,\ 0 < y \leq 1,\ 0 \leq z \leq 1,\ \text{and } 0 \leq y+z \leq 1,$$

$M^1$, $M^2$, and $M^3$ each independently comprise at least one of Ni, Co, Mn, Al, B, Ba, Ca, Ce, Cr, Fe, Mo, Nb, Si, Sr, Mg, Ti, V, W, Zr, La, and a combination thereof, and
X comprises at least one of F, S, P, and Cl.

12. The positive electrode (10) according to any one of claims 1 to 11, wherein for the positive electrode (10) according to (ii) an average particle diameter ($D_{50}$) of the lithium-based additive (LAD) is in a range of $\geq 1\ \mu m$ to $\leq 50\ \mu m$.

13. The positive electrode (10) according to any one of claim 1 to 12, wherein for the positive electrode (10) according to (ii) an amount of the lithium-based additive (LAD) in the first portion is in a range of $\geq 0$ wt% to $\leq 5$ wt%.

14. The positive electrode (10) according to any one of claims 1 to 13, wherein for the positive electrode (10) according to (ii) an amount of the lithium-based additive (LAD) in the second portion is in a range of $\geq 1$ wt% to $\leq 10$ wt%.

# FIG. 1

# FIG. 2

# FIG. 3

EP 4 718 510 A1

# FIG. 4

# FIG. 5

# FIG. 6

# FIG. 7A

# FIG. 7B

FIG. 8

10'

N

TKL'

AML1'

COL1'

D3

D1

# FIG. 9

FIG. 10

EP 4 718 510 A1

ATL2

ATL1 ATL1

COL1

D3

D1

Europäisches
Patentamt

European
Patent Office

Office européen
des brevets

# EUROPEAN SEARCH REPORT

**Application Number**

EP 25 20 4803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 109 589 A1 (LG ENERGY SOLUTION LTD [KR]) 28 December 2022 (2022-12-28) | 1-5,7-14 | INV. H01M4/131 |
| Y | * paragraphs [0009] - [0010]; claims 1, 2 * | 6 | H01M4/1391 H01M4/36 |
| | * paragraph [0075] * | | H01M4/62 |
| | * paragraphs [0036] - [0042]; claims 2, 5-8 * | | H01M4/86 |
| | ----- | | ADD. |
| X | CN 116 325 212 A (LG NEW ENERGY CO LTD) 23 June 2023 (2023-06-23) | 1-5,7-14 | H01M4/02 |
| Y | * paragraphs [0012] - [0029], [0062] - [0063]; claims 1-14 * | 6 | |
| | * paragraph [0130] * | | |
| | ----- | | |
| Y | EP 4 071 856 A1 (CONTEMPORARY AMPEREX TECHNOLOGY CO LTD [CN]) 12 October 2022 (2022-10-12) | 6 | |
| A | * paragraphs [0045] - [0047]; claim 3 * | 1-5,7-14 | |
| | ----- | | |
| A | EP 4 195 309 A1 (LG ENERGY SOLUTION LTD [KR]) 14 June 2023 (2023-06-14) | 1-14 | TECHNICAL FIELDS SEARCHED (IPC) |
| | * paragraphs [0010] - [0027], [0053] - [0059]; claims 1-16 * | | H01M |
| | ----- | | |

The present search report has been drawn up for all claims

| Place of search | Date of completion of the search | Examiner |
|---|---|---|
| The Hague | 12 December 2025 | Martin, Andréa |

EPO FORM 1503 03.82 (P04C01)

## ANNEX TO THE EUROPEAN SEARCH REPORT
## ON EUROPEAN PATENT APPLICATION NO.

EP 25 20 4803

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2025

| Patent document cited in search report | | Publication date | Patent family member(s) | | Publication date |
|---|---|---|---|---|---|
| EP 4109589 | A1 | 28-12-2022 | CN | 115443557 A | 06-12-2022 |
| | | | EP | 4109589 A1 | 28-12-2022 |
| | | | JP | 7471729 B2 | 22-04-2024 |
| | | | JP | 2023519375 A | 10-05-2023 |
| | | | KR | 20220120798 A | 31-08-2022 |
| | | | US | 2023178724 A1 | 08-06-2023 |
| | | | WO | 2022182047 A1 | 01-09-2022 |
| CN 116325212 | A | 23-06-2023 | CN | 116325212 A | 23-06-2023 |
| | | | EP | 4199156 A1 | 21-06-2023 |
| | | | JP | 7594098 B2 | 03-12-2024 |
| | | | JP | 2023542881 A | 12-10-2023 |
| | | | KR | 20220161653 A | 07-12-2022 |
| | | | US | 2023335742 A1 | 19-10-2023 |
| | | | WO | 2022255665 A1 | 08-12-2022 |
| EP 4071856 | A1 | 12-10-2022 | CN | 116114082 A | 12-05-2023 |
| | | | EP | 4071856 A1 | 12-10-2022 |
| | | | US | 2023261178 A1 | 17-08-2023 |
| | | | WO | 2022109886 A1 | 02-06-2022 |
| EP 4195309 | A1 | 14-06-2023 | CN | 116057725 A | 02-05-2023 |
| | | | EP | 4195309 A1 | 14-06-2023 |
| | | | JP | 7570759 B2 | 22-10-2024 |
| | | | JP | 2023540111 A | 21-09-2023 |
| | | | KR | 20220164094 A | 13-12-2022 |
| | | | US | 2024030427 A1 | 25-01-2024 |
| | | | WO | 2022255669 A1 | 08-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020240133135